# EUROPEAN PATENT APPLICATION

(11) **EP 2 362 155 A2**
(43) Date of publication of application: **31.08.2011**
(21) Application number: 11153628.0
(22) Date of filing: 08.02.2011
(51) Int. Cl.: F24J 2/04, F24J 2/24, F24J 2/46

(54) **Roof covering system for heat exchanging**

(30) Priority: 09.02.2010 NL 2004215
(71) Applicant: Schiebroek, Adrianus Andreas Gijsbertus, 5674 AE Nuenen (NL)
(72) Inventor: Schiebroek, Adrianus Andreas Gijsbertus, 5674 AE Nuenen (NL)
(74) Representative: Verhees, Godefridus Josephus Maria

(57) **Abstract**

A roofing system 1 for heat exchange comprises a plurality of interconnected sets 3 of roof panels which are provided with collector lines 5 for heat supply or removal. For detecting problems such as blockages in a fast and simple manner the roofing system includes distributors 7. Four sets of roof panels 3 are connected to each distributor. The interconnections 9 of the collector lines in the roof panel sets are close together so as to enable them to be connected directly to the distributor 7. Each distributor 7 further comprises a flow meter 11 for measuring the flow through the lines of the roof panels. If a problem occurs, the flow in the place of the distributors can be verified in a simple manner to check where a leakage or blockage occurs.

## Description

### Field of the invention

The invention relates to a roofing system for heat exchange, comprising a plurality of sets of roof panels coupled to each other which are provided with collector lines for supplying or removing heat, the roofing system further including distributors with two or more sets of roof panels being connected to each distributor, the interconnections of which sets being close together and connected to the distributor. A roof panel in this context is understood to mean a panel comprising an insulation layer that accommodates ducts through which a collector line is installed. A collector line is of such length that it extends over a plurality of roof panels. The roof panels accommodating one collector line form a set.

### State of the art

A roof panel which is suitable for a roofing system of this type is known from US 4,213,929A. The known roof panel comprises an insulation layer with a groove provided in it which accommodates a line. A set of the known roof panels accommodates the line in a zigzag pattern and the interconnections are close together. The sets of roof panels are connected to distributors which are formed by branches of a supply line.

### Summary of the invention

It is an object of the invention to provide a roofing system of the type defined in the opening paragraph where problems, if occurring, can be located in a faster way. For this purpose the roofing system according to the invention is characterised in that every distributor comprises at least one flow meter for measuring the flow through the lines of the roof panels. If a problem occurs, the flow in the place of the distributors can be checked in an easy manner to verify at which spot there is a leakage or blockage. Preferably, one flow meter per set is present in the distributor for determining in an even more precise manner where the location of the defect is.

An embodiment of the roofing system according to the invention is characterised in that the distributor further includes two couplers for distribution lines as well as a de-aerator. The distributors can be coupled to each other and to service points by means of distribution lines. By providing the distributor with a de-aerator it is avoided that air bubbles are present in the collector lines as well as in the distribution lines.

A further embodiment of the roofing system according to the invention is characterised in that the distributor with the roof panels connected to it covers an uninterrupted surface with the collector lines being spread over the entire surface. As a result, the complete roof surface can be used for heat exchange.

A still further embodiment of the roofing system according to the invention is characterised in that accessible service points are present in the roofing system, which service points have covers above the distributors and the roof panels show a slight taper upwards to the distributor. As a result, it is easy to gain access to a distributor and a proper de-aeration is guaranteed.

### Brief description of the drawings.

The invention will be elucidated more fully below based on an example of embodiment of the roofing system according to the invention while reference is made to the appended drawing figures, in which:
Fig. 1 shows a plan view of an embodiment of the roofing system according to the invention; and
Fig. 2 shows a sectional view of the roofing system shown in Fig. 1.

### Detailed description of the drawings.

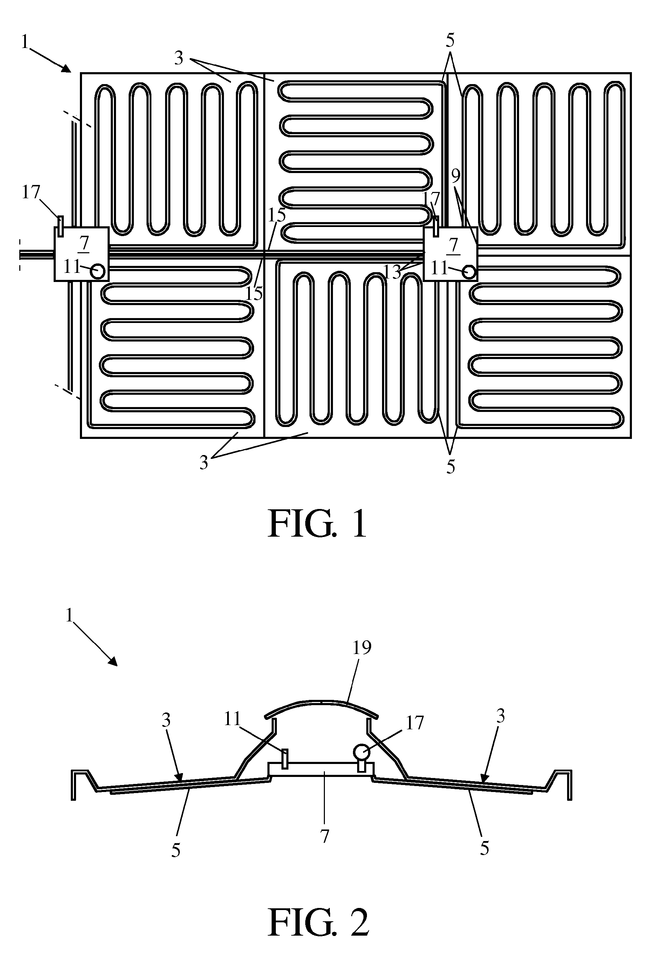

Figs. 1 and 2 show a plan view and a sectional view respectively of an embodiment of the roofing system according to the invention. The roofing system 1 comprises a plurality of interconnected sets 3 of roof panels which comprise collector lines 5 for heat supply and removal. For detecting problems such as blockages in a fast and simple manner the roofing system further includes distributors 7. Four sets 3 are connected to each distributor. The interconnections 9 of the collector lines in the roof panels are close together so as to enable them to be connected directly to the distributor 7. Each distributor 7 comprises a flow meter 11 for measuring the flow through the lines of the roof panels. If a problem occurs, the flow in the place of the distributors can be verified in a simple manner to check where a leakage or blockage occurs. Preferably, one flow meter per set 3 is located in the distributor (not shown) for assessing in a more purpose oriented way where the defect is.

Each distributor 7 comprises two connection couplers 13 for distribution lines 15 through which the distributors are coupled to each other and to service points. The distributor 7 further includes a de-aerator 17 as a result of which it is avoided that in both the collector lines and the distribution lines air bubbles are formed.

The distributor 7 with the sets of roof panels 3 connected to it covers an uninterrupted surface over which the collector lines 5 are present in a spread manner. In consequence, the entire available roof surface can be used for heat exchange.

Accessible service points with covers 19 are present above the distributors 7, see Fig. 2, to provide easy access to them. The sets 3 have an upward slope direction to the distributors 7, so that a proper de-aeration is guaranteed.

Albeit the invention has been described in the foregoing with reference to the drawings, it should be pointed out that the invention is not by any manner or means restricted to the embodiments shown in the drawings. The invention also extends over any embodiment deviating from the embodiment shown in the drawing Figures within the spirit and scope defined by the claims.

## Claims

1. A roofing system (1) for heat exchange, comprising a plurality of sets (3) of roof panels coupled to each other which are provided with collector lines (5) for supplying or removing heat, the roofing system further including distributors (7) with two or more sets (3) of roof panels being connected to each distributor, the interconnections of which sets being close together and connected to the distributor, **characterised in that** every distributor (7) comprises at least one flow meter (11) for measuring the flow through the lines of the roof panels.

2. A roofing system (1) as claimed in claim 1, **characterised in that** one flow meter (11) per set (3) is available in the distributor (7).

3. A roofing system (1) as claimed in claim 1 or 2, **characterised in that** the distributor (7) further includes two connection couplers (13) for distribution lines (15) as well as a de-aerator (17).

4. A roofing system (1) as claimed in claim 1, 2 or 3, **characterised in that** the distributor (7) with the roof panel sets connected to it covers an uninterrupted surface with the collector lines (5) being spread over the entire surface.

5. A roofing system (1) as claimed in claim 1, 2, 3 or 4, **characterised in that** accessible service points are present in the roofing system (1), which service points have covers (19) above the distributors (7) and the roof panels show a slight taper upwards to the distributor.
